Europäisches Patentamt

European Patent Office

Office européen des brevets

(11) Numéro de publication: **0 377 347**
**A1**

## (12) DEMANDE DE BREVET EUROPEEN

(21) Numéro de dépôt: **89400028.0**

(51) Int. Cl.⁵: **B23Q 9/00**

(22) Date de dépôt: **05.01.89**

(43) Date de publication de la demande:
**11.07.90 Bulletin 90/28**

(84) Etats contractants désignés:
**DE ES GB IT**

(71) Demandeur: **Grimberg, Gérard**
**28 rue de Garches**
**F-92210 Saint-Cloud(FR)**

(72) Inventeur: **Grimberg, Gérard**
**28 rue de Garches**
**F-92210 Saint-Cloud(FR)**

(74) Mandataire: **Kohn, Armand**
**5 Avenue Foch**
**F-92380 Garches(FR)**

(54) **Dispositif de guidage de machine portative.**

(57) Dispositif pour supporter et guider des machines électro-portatives exécutant un travail rectiligne, tel que coupe, rainurage, moulurage, qui comprend un rail rectiligne (1) à section en U comportant deux ailes parallèles (2) et un fond (3) dans lequel un chemin de roulement (5) reçoit un chariot mobile (6) destiné à porter la machine, le rail étant fixé sur le matériau à travailler (23) par des étriers coulissants (8,24); le rail est constitué, au moins sur une majeure partie de son périmètre, par une double paroi en U, les deux parois étant rendues solidaires l'une de l'autre par des entretoises disposées dans l'espace entre les deux parois, de façon à constituer une structure monobloc, indéformable sous les efforts engendrés par la machine en toute position.

FIG.1

## Dispositif de guidage de machine portative

La présente invention concerne un dispositif utilisable pour supporter et guider une machine électro-portative qui doit être déplacée en ligne droite pour exécuter son travail, par exemple coupe, rainurage ou moulurage, le dispositif étant fixé directement sur un matériau en plaque à travailler, par exemple bois, fibrociment, "Placo-plâtre".

Dans ce domaine, on connaît les guidages pour scies à panneaux, mais ces dispositifs ne permettent que des coupes à angle droit, ils sont de grandes dimensions, donc coûteux, difficilement transportables et non adaptables facilement à des travaux variés.

On connaît également l'utilisation d'une règle de guidage tenue sur la plaque de matériau par des serre-joints, ou d'un support à tige adaptable au bord de la plaque, mais ces dispositifs ne permettent pas le travail au milieu d'une plaque de grandes dimensions, ou sur des plaques dont les bords ne sont pas rectilignes, et l'orientation de la machine est limitée à un travail à plat. En outre, ces dispositifs peuvent gêner l'opérateur et donc entraîner un risque de blessure, et les déchets engendrés par le travail exécuté peuvent se déposer sur l'élément de guidage et nuire à la précision et à la facilité de manoeuvre.

L'invention vise à éviter, d'une manière nouvelle, les divers inconvénients ci-dessus des dispositifs connus.

L'invention a donc pour objet un dispositif de guidage de machine électro-portative à travail rectiligne, qui se fixe en orientation tridimensionnelle quelconque sur une plaque de matériau à travailler et qui permet d'effectuer un travail guidé précis dans cette position quelconque.

L'invention a également pour objet un dispositif du type ci-dessus, qui est léger, de faible encombrement, facile à transporter, monter, utiliser et démonter, sans parties saillantes pouvant créer un risque pour l'opérateur ou une gêne pour le mouvement de la machine.

L'invention a encore pour objet un dispositif du type ci-dessus, dont la longueur peut facilement être adaptée aux dimensions du matériau, par assemblage bout-à-bout de guidages élémentaires.

L'invention a aussi pour objet un dispositif de guidage du type ci-dessus, qui permet à la machine de suivre la surface du matériau, même non plane, afin d'effectuer un travail rectiligne de profondeur constante par rapport à cette surface.

L'invention procure également un dispositif du type ci-dessus, dont les parties de guidage sont protégées des déchets de matériau.

Conformément à l'invention, ces objectifs sont atteints par un dispositif comprenant un rail rectiligne à section en U à l'intérieur duquel roule un chariot porte-outil, le rail pouvant être fixé par des étriers de serrage à un matériau en plaque sur lequel l'outil doit effectuer un travail, ce dispositif étant caractérisé ence que le rail est constitué, au moins sur une majeure partie de sa section, par une double paroi en U, les deux parois étant rendues solidaires l'une de l'autre par des entretoises ou cloisons disposées dans l'espace entre les deux parois.

Suivant une autre caractéristique de l'invention, au moins une dite entretoise s'étend à l'intérieur des ailes à double paroi du profil en U dans la direction longitudinale du rail, de manière à définir dans cet espace intérieur d'une part une glissière, comportant une rainure ouverte dans sa paroi extérieure, pour le montage longitudinalement réglable des étriers et d'accessoires de réglage ou de manoeuvre de la machine, et d'autre part des logements pour des prolongateurs ou broches d'assemblage bout-à-bout de rails successifs, lesdites broches étant de préférence au nombre de quatre à chaque jonction de rails.

Suivant encore une autre caractéristique de l'invention, les ailes du profil en U comportent chacune, à leur extrémité, un rebord dirigé vers l'intérieur du profil et qui s'étend jusqu'au voisinage immédiat du chariot, parallèlement à la base du U.

Selon un autre aspect de l'invention, les chemins de roulement du chariot ont une section triangulaire et sont fixés à l'intérieur des ailes du profil en U, et les galets, dont la gorge présente un profil correspondant, tournent sur des axes parallèles aux ailes et qui sont vissés directement, à leurs extrémités pourvues de filetages à droite et à gauche respectivement, dans deux plaques parallèles constituant le corps du chariot.

Une autre caractéristique du dispositif suivant l'invention est que le chariot présente une configuration en T, le jambe du T étant formée par le corps du chariot logé à l'intérieur du rail, et la barre transversale du T étant dans un plan parallèle à celui du corps mais légèrement décalé au-dessus du rail, la barre transversale s'étendant latéralement au-delà des ailes du rail pour porter des accessoires, tels que des butées de réglage de course,qui doivent se déplacer librement le long du rail.

Selon encore un autre aspect de l'invention, les étriers de fixation du rail comprennent une embase qui peut coulisser dans la glissière précitée de l'aile du rail, une tige extérieure, solidaire de ladite embase et perpendiculaire à la face d'appui du rail, un manchon qui peut être réglé angulairement sur ladite tige, et une vis de serrage du matériau portée par une équerre solidaire dudit manchon.

Suivant un autre aspect de l'invention, deux tiges cylindriques identiques, parallèles au matériau et perpendiculaires au rail, sont fixées à une extrémité sur le chariot de sorte qu'elles peuvent tourner librement, mais sans possibilité de déplacement axial ; elles sont reliées à leur autre extrémité de la même façon à la machine, et elles comportent dans leur partie intermédiaire un double coude en baïonnette dont le changement de position angulaire permet de compenser les variations relatives entre les surfaces de contact de la machine et du rail sur le matériau.

D'autres objets et avantages de l'invention apparaîtront aux hommes de l'art, à la lumière de la description ci-après d'un mode préféré de réalisation, non limitatif, représenté sur les dessins annexés dans lesquels :

la figure 1 est une vue en perspective de l'ensemble du dispositif ;

la figure 2 est une vue de dessus du dispositif en position de travail ;

les figures 3A,3B,3C représentent un étrier pivotant pour la fixation du dispositif en position inclinée ;

la figure 4 est une vue de profil du dispositif en position verticale ;

la figure 5 est une coupe transversale suivant la ligne A-A de la figure 1 ;

les figures 6A,6B sont respectivement une vue de côté et une vue de dessus du chariot ; et

les figures 7 et 8 illustrent le dispositif équipé d'un accessoire pour l'exécution d'un travail rectiligne de profondeur constante dans un matériau non plan.

Le dispositif représenté sur les dessins est destiné au montage et au guidage d'une machine électroportative en vue d'exécuter un travail par déplacement rectiligne de la machine sur un matériau en plaque qui peut être de grande dimension.

Le dispositif comprend essentiellement un ou plusieurs rails identiques 1, 20, assemblés bout-à-bout en fonction de la dimension de la plaque de matériau ; un chariot 6 qui roule dans le rail et sur lequel on peut fixer la machine ; des étriers 8 de fixation du rail sur la plaque de matériau, et des accessoires éventuels de manoeuvre et de réglage de course du chariot.

Chaque rail 1 est fabriqué en une matière rigide et présente une configuration en U large par rapport à sa hauteur, comportant deux ailes 2 et un fond 3, ce dernier servant de face d'appui du rail contre la plaque de matériau. Conformément à l'invention, les ailes et le fond sont à double paroi, les deux parois étant reliées par des entretoises ou cloisons d'interconnexion de manière à constituer une structure monobloc légère, capable de résister sans déformation aux efforts engendrés par le fonctionnement de la machine quelle que soit son orientation dans l'espace.

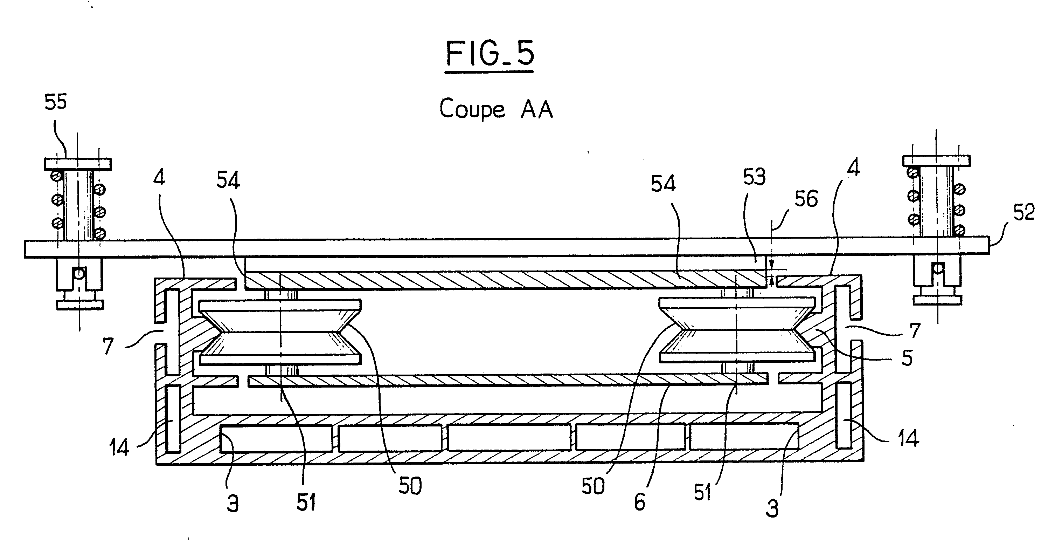

Comme on le voit en particulier sur la figure 5, la double paroi et l'entretoise des ailes définissent ensemble une glissière longitudinale 7 accessible par une rainure ouverte ménagée dans la paroi extérieure. La glissière est également ouverte aux extrémités. Cette glissière peut ainsi recevoir des étriers de fixation du rail, décrits plus loin, et des accessoires tels que des butées 10 de réglage de longueur de travail, des poulies de contrepoids, des poulies de tirage de chariot, etc. Cela permet un montage et un réglage faciles de ces composants, à l'endroit voulu le long du rail, avec blocage en position au moyen de vis 13, 17. En outre, lesdits composants ne gênent pas l'entrée et la sortie du chariot.

A ses extrémités, la glissière 7 peut recevoir des prolongateurs ou éclisses 9, bloqués par des vis 22, qui permettent d'assembler des rails 1,20 bout-à-bout jusqu'à obtenir la longueur voulue. On constitue ainsi un rail modulaire de plus grande longueur que le matériau à travailler, de sorte que le chariot reste toujours maintenu dans le rail même au début et à la fin de la course de travail, et qu'on peut facilement serrer les étriers sur le matériau aux extrémités de celui-ci.

On voit également sur la figure 5 que la double paroi et l'entretoise des ailes définissent un autre logement 14 qui peut recevoir d'autres éclisses 21. Les rails sont ainsi facilement assemblés les uns aux autres par quatre éclisses, de sorte que la linéarité et la rigidité de l'ensemble modulaire sont assurées.

Les ailes 2 comportent en outre un rebord longitudinal dirigé vers l'intérieur, parallèlement à la base du U, et qui s'étend jusqu'au voisinage immédiat du chariot. Ce rebord augmente encore la rigidité du rail et empêche les déchets de matériau de tomber sur les galets du chariot.

Deux chemins de roulement parallèles 5, à profil triangu laire pour absorber un jeu éventuel, sont fixés à l'intérieur des ailes pour recevoir le chariot mobile 6 par l'intermédiaire de galets 50 à gorge de profil correspondant. Un petit espace libre est conservé entre le dessous du chariot et le fond du rail, pour le passage du câble de traction du chariot.

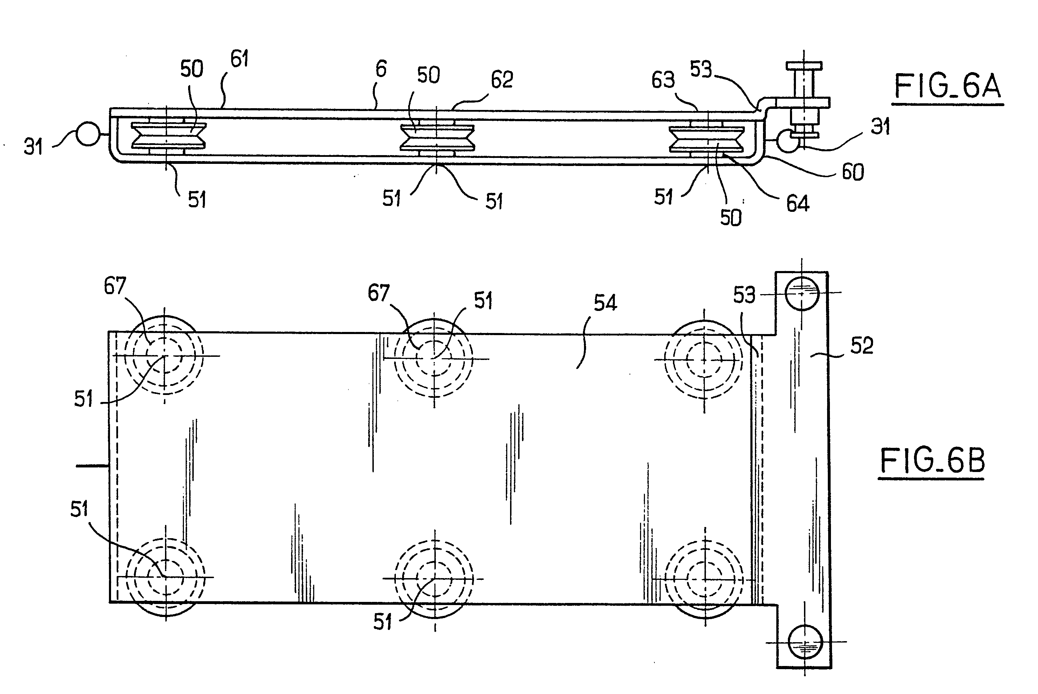

On se reporte maintenant aux figures 6A,6B qui représentent mieux le chariot 6, dont le corps est constitué d'une tôle 60 pliée en U et d'une plaque supérieure 61 qui empêche les déchets de venir en contact avec les galets 50. Ces derniers, dont le nombre dépend de l'application envisagée et qui peuvent être au nombre de six comme représenté, sont montés sur des axes 51 au moyen de roulements à billes 67 espacés des plaques supérieure et inférieure par des entretoises 64. Les extrémités des axes comportent des filetages, à droite et à gauche, respectivement, qui se vissent dans des trous taraudés 62 des plaques, de sorte qu'on obtient une structure de chariot légère, rigide et de faible épaisseur du fait de l'absence d'écrous. La position des axes 51 est telle que les galets s'appliquent avec une pression adéquate sur les chemins de roulement. D'autre part, des anneaux 31 sont prévus à chaque extrémité du chariot pour attacher éventuellement un câble de traction.

On voit également que le chariot 6 présente, en vue en plan (6B), une configuration en T comprenant le corps 54, construit comme décrit ci-dessus, et une traverse ou tête 52 solidaire du corps mais dont le plan est décalé, par une baïonnette 53, un peu au-dessus du plan de la plaque supérieure 61, c'est-à-dire un peu au-dessus du rebord 4 des ailes du rail. La traverse 52, qui s'étend latéralement au-delà des ailes 2 et porte des accessoires tels que des butées effaçables 55 de réglage de course, n'empêche donc pas le mouvement du chariot. Cette disposition présente l'avantage de réduire l'encombrement puisque la plus grande partie du chariot est inscrite dans le rail, de faciliter l'insertion du chariot dans le rail et son extraction puisque la tête peut servir d'appui temporaire sur le dessus du rail lors de ces opérations, et de donner une configuration générale avec un minimum de parties saillantes, ce qui évite les risques de blessure de l'opérateur.

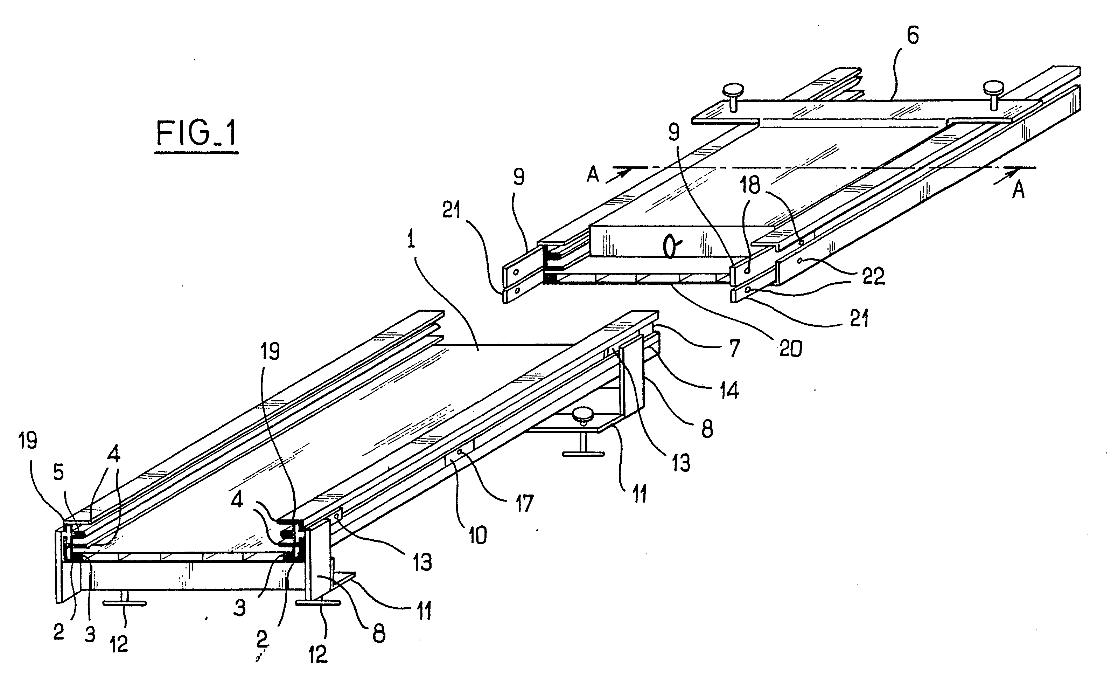

En ce qui concerne les étriers de fixation du rail, la figure 1 illustre des étriers 8 pour un travail perpendiculaire au bord de la plaque de matériau. Ces étriers coulissent par l'intermédiaire d'une embase 19 dans les glissières 7, dans lesquelles ils sont bloqués par des vis 13, et ils sont bloqués sur le matériau par des vis 12.

Les étriers de fixation 8 sont montés face-à-face, maintenus chacun de part et d'autre du rail, et les cornières 11 qui en sont solidaires sont disposées en vis-à-vis vers l'intérieur. Le blocage en position de travail s'effectue par l'intermédiaire des vis 13 dans les glissières 7 du rail, et par les vis 12 sur le matériau à travailler. Les étriers peuvent être de toute dimension appropriée, au-dessous du rail. Tous les autres accessoires montés sur le rail sont prévus pour laisser un libre passage du chariot mobile sur le matériau.

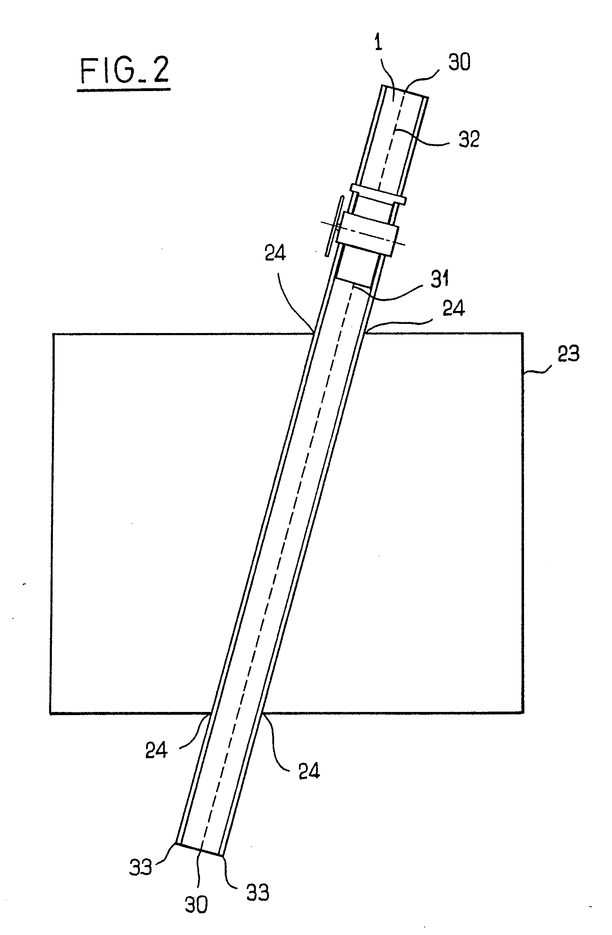

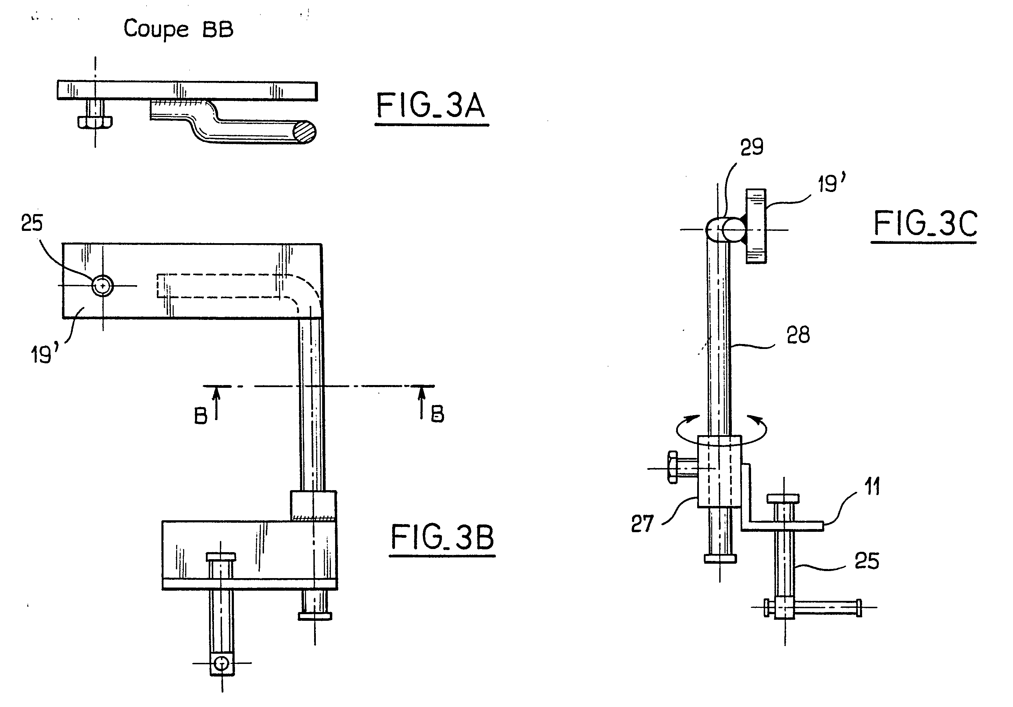

On se reporte maintenant à la figure 2 qui représente le rail 1 disposé de façon à former un angle par rapport au matériau 23 à travailler, et aux figures 3A, 3B, 3C qui représentent des étriers de fixation 24 de type coulissant et pivotant. Ces étriers se montent dans les glissières 7 par l'intermédiaire de leurs embases 19' qui peuvent être déplacées en fonction de l'angle désiré et de la longueur et qui sont bloquées sur le rail par l'intermédiaire de vis 13'. Une cornière 11 de serrage sur le matériau 23 est fixée sur un manchon 27 au diamètre de la tige support 28, ce qui permet une rotation afin d'obtenir l'angle voulu. La tige support est fixée sur l'embase 19' avec un dégagement 29 lui évitant de toucher le rail.

Des poulies 30, montées à chaque extrémité de rail 1, permettent la circulation du câble de tirage 32 attaché aux anneaux 31 prévus à cet effet sur le chariot mobile 6, ce qui permet à l'opérateur de faire circuler celui-ci manuellement. Lorsqu'il n'est pas possible de tenir l'appareil, en raison de la grandeur du matériau à travailler, on prévoit une commande à distance pour obtenir une sécurité totale. Deux équerres 33 de fin de course sont prévues pour éviter la sortie du chariot 6.

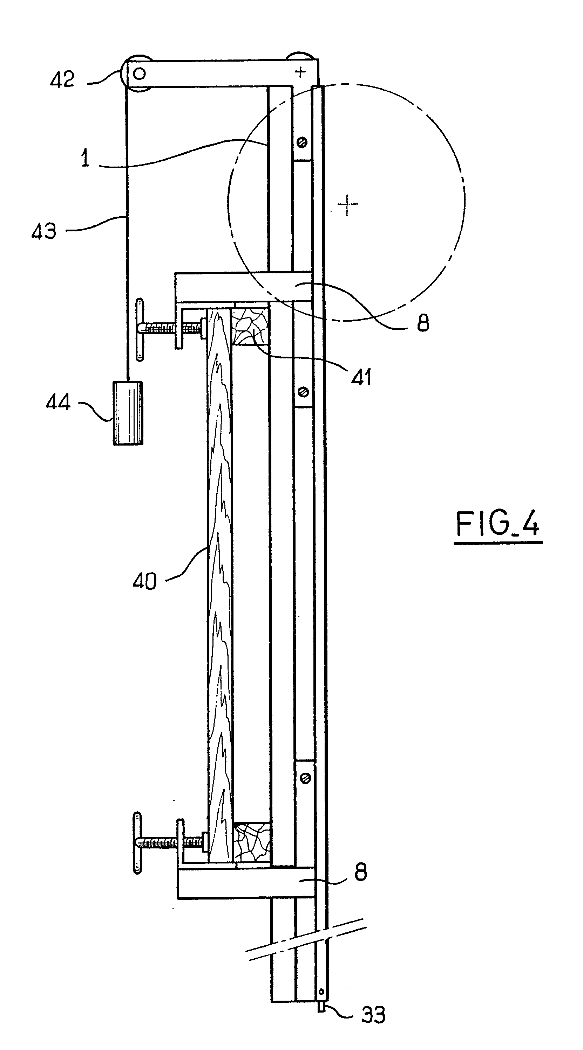

La figure 4 représente un rail longitudinal 1 en position verticale, fixé sur une plaque support 40 par des étriers de fixation réglables 8 à 90°. Une cale 41, d'épaisseur supérieure à celle du matériau à travailler, est placée entre la plaque support 40 et le rail 1 pour permettre un libre passage de la pièce à travailler. Ce libre passage est prévu pour éviter de démonter le rail 1 à chaque opération et il permet de faire avancer le matériau à la côte voulue, pour obtenir un débit important. En haut du rail 1, deux poulies 42 permettent à un câble 43, attaché à un contrepoids 44 et au chariot 6, d'entraîner ce dernier sans effort. Le contrepoids 44 équilibre l'ensemble constitué par le chariot et la machine, par exemple une scie circulaire. En bas du rail 1 sont prévues deux équerres 33 de fin de course.

L'installation du dispositif suivant l'invention est décrite ci-après, avec référence à la figure 2 et à une scie circulaire. L'utilisateur assemble d'abord, s'il y a lieu, plusieurs éléments de rail 1, facilement transportables, pour obtenir la longueur totale voulue compte tenu d'une longueur d'attaque et de sortie, à l'extérieur du matériau, supérieure à la longueur du chariot. Il fixe ensuite le rail sur la plaque de matériau à découper, à l'aide des étriers coulissants orientables 24 dans le cas de la position inclinée de la figure 2. Puis il insère le chariot dans le chemin de roulement, cette opération étant facilitée par la forme en T du chariot. Ce dernier est alors guidé sans jeu et en ligne droite sur le chemin de roulement 5 et il suffit de tirer le chariot. La protection de la lame de scie s'efface et la coupe peut être effectuée. A la sortie de la coupe, la protection reprend sa position initiale.

On voit que le dispositif suivant l'invention permet un travail rectiligne dans toutes les positions, sur une longueur quelconque, et qu'il est facile à transporter, à monter, à utiliser et à démonter.

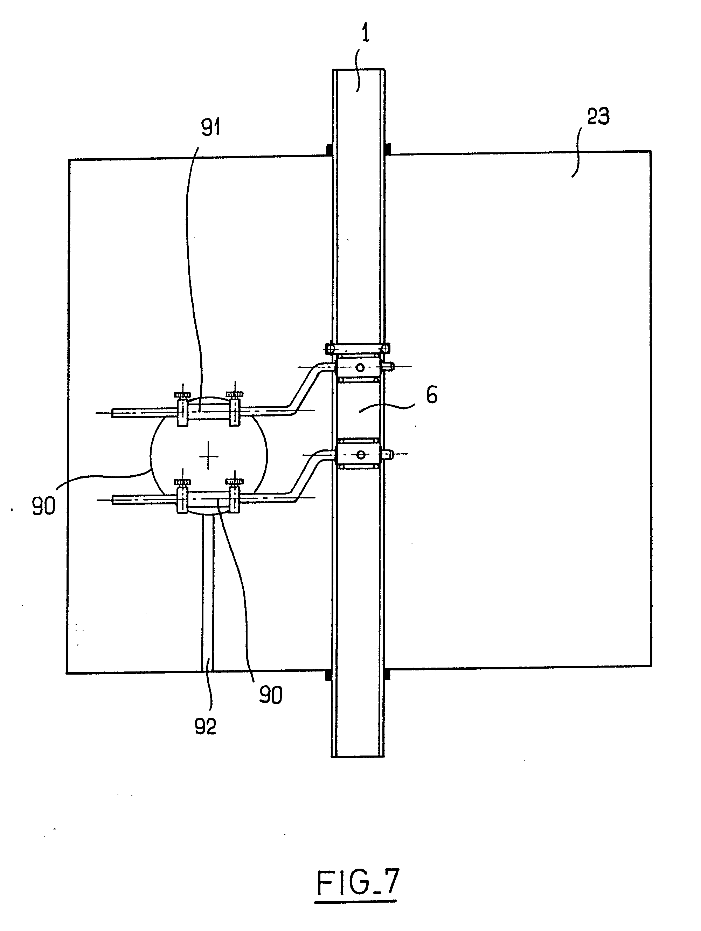

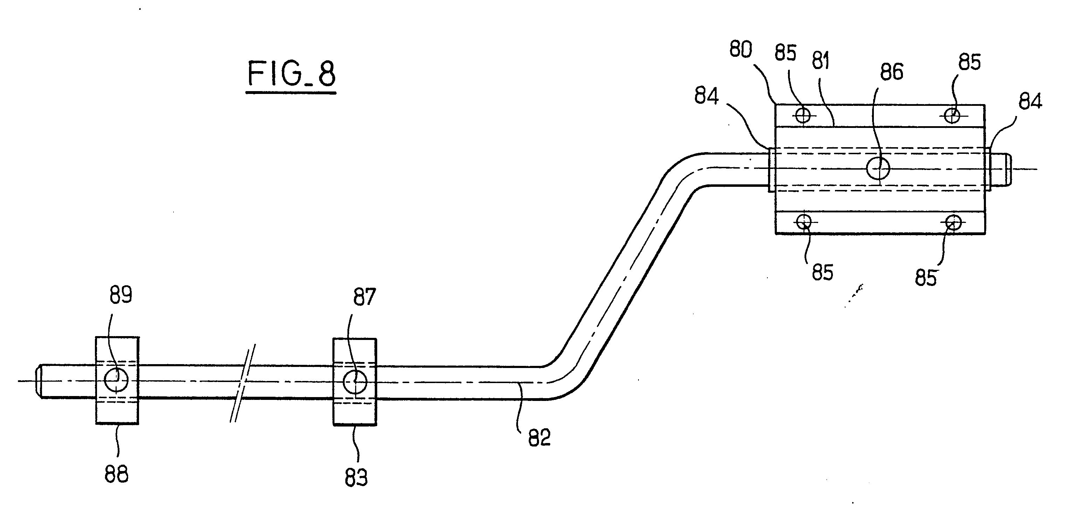

Les figures 7 et 8 représentent le dispositif, pourvu d'un accessoire permettant d'effectuer un travail de profondeur constante, même si le matériau présente un gauchissement, une courbure ou une configuration particulière de sa surface. Cet accessoire comprend une tôle 80 percée de trous 85 pour sa fixation sur le chariot 6. Un manchon 81 avec vis de serrage 86 est fixé sur cette tôle 80. Une tige en fer rond, comportant dans sa partie intermédiaire un double coude en forme de baïonnette 82, est introduite dans le manchon 81 et tenue dans celui-ci par des circlips 84, afin que la baïonnette puisse tourner librement dans le manchon, mais sans possibilité de déplacement latéral. A l'autre extrémité de la baïonnette, un manchon 83 est réglé à la position désirée pour le travail à exécuter, puis bloqué par une vis 87. On monte la machine 90 sur la baïonnette, grâce aux trous 91 prévus dans sa semelle, et on place un autre manchon 88, serré par une vis 89 sur la tige 82. Ainsi, la machine peut pivoter librement, sans jeu latéral. Le dispositif comprend deux pièces identiques 82 montées sur le chariot 6 à un entraxe correspondant aux trous de la semelle de la machine. La machine peut alors suivre une surface non plane, les variations relatives entre la zone de contact de la machine et celle du rail sur le matériau étant compensées automatiquement par une position angulaire différente des baïonnettes qui tournent librement dans leurs fixations. Bien entendu, le décalage entre les branches parallèles de la baïonnette doit être approprié aux dénivellations de la surface, afin d'obtenir une course suffisante de la machine, tout en conservant à la baïonnette une inclinaison, par rapport au matériau, telle que la réaction de la machine engendre un pivotement de la baïonnette.

Il est entendu que des modifications de détail peuvent être apportées dans la forme et la construction du dispositif suivant l'invention, sans sortir du cadre de celle-ci.

**Revendications**

1. Dispositif pour supporter et guider des machines électro-portatives exécutant un travail rectiligne, tel que coupe, rainurage, moulurage, qui comprend un rail rectiligne (1) à section en U comportant deux ailes parallèles (2) et un fond (3), dans lequel un chemin de roulement (5) reçoit un chariot mobile (6) destiné à porter la machine, le rail étant fixé sur le matériau à travailler (23) par des étriers coulissants (8,24), caractérisé en ce que le rail est constitué, au moins sur une majeure partie de son périmètre, par une double paroi en U, les deux parois étant rendues solidaires l'une de l'autre par des entretoises disposées dans l'espace entre les deux parois, de façon à constituer une structure monobloc, indéformable sous les efforts engendrés par la machine en toute position.

2. Dispositif suivant la revendication 1, caractérisé en ce qu'au moins une des dites entretoises s'étend à l'intérieur des ailes à double paroi (2) du profil en U dans la direction longitudinale du rail, de manière à définir, dans cet espace intérieur, d'une part une glissière (7) comportant une rainure ouverte dans sa paroi extérieure, pour le montage longitudinalement réglable des étriers (8,24) et d'accessoires de réglage (10) ou de manoeuvre (42) de la machine, et d'autre part des logements (7,14) pour des prolongateurs ou broches (9,21) d'assemblage bout-à-bout de rails successifs (1,20), les dites broches étant de préférence au nombre de quatre à chaque jonction de rail.

3. Dispositif suivant la revendication 1 ou 2, caractérisé en ce que les ailes (2) du profil en U comportent chacune, à leur extrémité, un rebord (4) dirigé vers l'intérieur du profil et qui s'étend jusqu'au voisinage du chariot (6), parallèlement à la base du U.

4. Dispositif suivant l'une quelconque des revendications précédentes, caractérisé en ce que les chemins de roulement (5) ont une section triangulaire et sont fixés à l'intérieur des ailes (2), et les galets (50), dont la gorge présente un profil correspondant, tournent sur des axes (51) parallèles aux ailes et qui sont vissés directement, à leurs extrémités pourvues de filetages à droite et à gauche respectivement, dans deux plaques parallèles (60,61) constituant le corps du chariot.

5. Dispositif suivant l'une quelconque des revendications précédentes, caractérisé en ce que le chariot présente une configuration en T, la jambe du T étant formée par le corps (54) du chariot logé à l'intérieur du rail (1), et la barre transversale (52) du T étant dans un plan parallèle au plan du corps mais légèrement décalée au-dessus du rail et s'étendant latéralement au-delà des ailes (2) pour porter des butées (55) de réglage de course ou un autre accessoire.

6. Dispositif suivant l'une quelconque des revendications précédentes, caractérisé en ce qu'il est prévu deux prolongateurs ou broches d'assemblage (9,21) sur chaque aile, pour obtenir une jonction parfaite.

7. Dispositif suivant l'une quelconque des revendications 1 à 6, caractérisé en ce que les étriers (8) sont prévus pour une fixation à 90° et ne sont pas orientables.

8. Dispositif suivant l'une quelconque des revendications 1 à 6, caractérisé en ce que les étriers (24) de fixation du rail comprennent une embase (19') qui peut coulisser dans la glissière (7) de l'aile du rail, une tige extérieure (28) décalée et solidaire de ladite embase et perpendiculaire à la face d'appui (3) du rail, un manchon (27) qui peut être réglé angulairement sur ladite tige, et une vis de serrage (25) portée par une équerre (11) solidaire dudit manchon.

9. Dispositif suivant l'une quelconque des revendications 1 à 8, caractérisé en ce qu'il comprend deux tiges cylindriques identiques, fixées à une extrémité sur le chariot (6), parallèlement au matériau et perpendiculairement au rail, de sorte qu'elles peuvent tourner librement (81) mais sans possibilité de déplacement axial (84), les dites tiges étant reliées à leur autre extrémité de la même façon (83,88) à la machine et comportant, dans leur partie intermédiaire extérieure au rail, un double coude en baïonnette (82) dont le changement de position angulaire permet de compenser les variations relatives entre les surfaces de contact de la machine (90) et du rail sur le matériau.

FIG.1

EP 0 377 347 A1

FIG.2

Coupe BB

FIG.3A

FIG.3B

FIG.3C

EP 0 377 347 A1

FIG_4

# FIG_5

Coupe AA

EP 0 377 347 A1

FIG.6A

FIG.6B

FIG_7

FIG_8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X Y | CH-A- 590 117 (KOBLER) | 1,8,9 2-4,7 | B 23 Q 9/00 |
| Y | FR-A-2 527 497 (CHAGNON) * Revendication 3 * | 2 | |
| Y | US-A-4 224 854 (MALACHESKI) * Colonne 2, lignes 41-56 * | 3,4 | |
| Y | US-A-3 869 951 (LITWIN) | 7 | |
| A | US-A-3 396 713 (SHUMAN) * Revendication 6 * | 6 | |
| A | US-A-4 574 671 (ALESSIO) | 1 | |
| A | FR-A-2 261 848 (ALTENDORF) | 1 | |
| A | CH-A- 313 619 (IRION) | 1 | |
| A | EP-A-0 067 350 (ARCAIR) | 1 | DOMAINES TECHNIQUES RECHERCHES (Int. Cl.5) |
| A | US-A-2 708 465 (HUEBNER) | 1 | B 23 Q |
| A | GB-A-2 124 976 (NOYES) | 1 | |

Le présent rapport a été établi pour toutes les revendications

| Lieu de la recherche | Date d'achèvement de la recherche | Examinateur |
|---|---|---|
| LA HAYE | 19-09-1989 | DE GUSSEM J.L. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P0402)